# FASCICULE DE BREVET EUROPEEN

(11) **EP 1 480 924 B1**
(45) Date de publication et mention de la délivrance du brevet: **04.04.2018**
(21) Numéro de dépôt: 03722668.5
(22) Date de dépôt: 24.02.2003
(51) Int. Cl.: C04B 35/107, C09K 3/14, C04B 35/117, C04B 35/111, C04B 35/582, C04B 35/653, C01B 21/082

(54) **GRAINS ABRASIFS A BASE D'OXYNITRURE D'ALUMINIUM**
SCHLEIFKÖRNER AUF DER BASIS VON ALUMINIUMOXYNITRID
ABRASIVE PARTICLES BASED ON ALUMINIUM OXYNITRIDE

(30) Priorité: 28.02.2002 FR 0202554
(43) Date de publication de la demande: 01.12.2004
(73) Titulaire: ARC Fused Alumina, 73540 La Bâthie (FR)
(72) Inventeur: BOURLIER, Florent, F-74190 Passy (FR)
(74) Mandataire: Sarlin, Laure V.
(86) Numéro de dépôt international: PCT/FR2003/000594
(87) Numéro de publication internationale: WO 2003/072523

(56) Documents cités:
- EP-A- 0 273 569
- EP-A1- 0 494 129
- EP-A1- 0 509 940
- TABARY P ET AL: "Crystalline and microstructure study of the AlN-Al/sub 2/O/sub 3/ section in the Al-N-O system. I. Polytypes and gamma -AlON spinel phase" JOURNAL OF APPLIED CRYSTALLOGRAPHY, 1 APRIL 1999, MUNKSGAARD INTERNATIONAL BOOKSELLERS & PUBLISHERS, DENMARK, vol. 32, pt.2, pages 241-252, XP002248540 ISSN: 0021-8898
- DATABASE WPI Section Ch, Week 199041 Derwent Publications Ltd., London, GB; Class L02, AN 1990-307841 XP002248541 & JP 02 137765 A (BOEICHO GIJUTSU KENKYU HONBUCH), 28 mai 1990 (1990-05-28)
- CORBIN N D: "ALUMINUM OXYNITRIDE SPINEL: A REVIEW" JOURNAL OF THE EUROPEAN CERAMIC SOCIETY, ELSEVIER SCIENCE PUBLISHERS, BARKING, ESSEX, GB, vol. 5, no. 3, 1989, pages 143-154, XP000102945 ISSN: 0955-2219

## Description

### Domaine technique de l'invention

L'invention concerne le domaine des grains abrasifs, en particulier les grains agglomérés destinés aux meules de rectification, les grains appliqués sur des supports de type toiles et papiers, ainsi que les grains utilisés en projection ou en pâte de polissage.

### Etat de la technique

Dans le domaine des abrasifs, les produits à base d'alumine occupent une place importante depuis très longtemps puisque l'usage de l'émeri était déjà connu du monde grec. Le produit le plus communément utilisé est aujourd'hui le corindon électro-fondu, qu'il s'agisse du corindon blanc constitué d'alumine à peu près pure ou du corindon brun, moins pur, obtenu par fusion réduction de bauxite.

Le brevet GB 786815 (National Lead), déposé en 1954, décrit des grains abrasifs durs dans lesquels de fins cristaux de carbure de titane sont dispersés dans une matrice de corindon.

Un progrès important a été réalisé avec l'apparition de grains abrasifs obtenus par frittage d'alumines sol-gel. Le brevet EP 0273569 (3 M) décrit ainsi des particules abrasives constituées d'alumine, d'oxynitrure d'aluminium (AlON) γ et éventuellement d'un nitrure d'un métal du groupe IVb de la classification périodique, préparées par voie sol-gel et frittage réactif. Le coût élevé de ces produits a conduit à rechercher des grains abrasifs capables de mieux se positionner en rapport qualité-prix

Le brevet EP 0494129 de la demanderesse décrit un procédé de nitruration directe, à l'aide d'azote, de métaux à bas point de fusion, notamment l'aluminium.

Le brevet EP 0509940 de la demanderesse décrit une large gamme de produits abrasifs ou réfractaires à base d'oxynitrures obtenus par fusion au four électrique, parmi lesquels des produits à base d'oxynitrure d'aluminium de type AlON.

Le brevet FR 2720391 de la demanderesse décrit des abrasifs à base d'oxynitrure AlON, obtenus par fusion au four électrique, et dont la dureté a été améliorée en dispersant dans le matériau de base de fins cristaux de carbure de titane.

### But de l'invention

L'invention a pour but de fournir des grains abrasifs à base d'oxynitrure d'aluminium, destinés à être utilisés comme grains appliqués sur des supports de type toiles et papiers, ou comme grains agglomérés dans des meules de rectification des métaux et alliages métalliques, ou en projection ou en pâte de polissage, et capables de performances élevées.

### Objet de l'invention

L'invention a pour objet des grains abrasifs à base d'oxynitrure d'aluminium, avec une teneur équivalente en AIN, mesurée sur un diagramme pseudo-binaire Al₂O₃-AlN, comprise entre 2,5% et 7,5% en poids, et de préférence entre 3 et 6%, et une structure constituée majoritairement d'AlON φ' et d'AlON γ.

Ces grains ont le plus souvent une teneur en aluminium métal inférieure à 0,3% en poids, et de préférence à 0,1%, et une teneur en nitrure d'aluminium libre AIN inférieure à 0,3%, et de préférence à 0,1%.

L'invention a également pour objet un procédé de préparation de tels grains abrasifs comportant la préparation d'une charge d'alumine, de nitrure d'aluminium AlN et/ou d'oxynitrure AlₓO_{y}N_{z} et éventuellement d'oxyde de titane et/ou de chrome, la fusion de cette charge et son refroidissement à moins de 1°C par minute. Elle a également pour objet un procédé de préparation de tels grains abrasifs comportant la préparation d'un mélange de poudres d'alumine, de nitrure d'aluminium AIN et/ou d'oxynitrure AlₓO_{y}N_{z} et éventuellement d'oxyde de titane et/ou de chrome, le frittage réactif de ce mélange à une température comprise entre 1950 et 2000°C, et le refroidissement des grains frittés à moins de 1°C par minute.

### Description de l'invention

On définira ci-dessous la composition des produits en oxynitrure d'aluminium par leur teneur équivalente en AIN, en se plaçant dans un diagramme pseudo-binaire AIN - Al₂O₃ et non dans un diagramme ternaire Al-O-N, ce qui ne signifie nullement que ces phases AlN et Al₂O₃ soient réellement présentes dans le produit décrit. On fait donc la distinction entre les teneurs équivalentes en AlN, destinées uniquement à positionner le produit correspondant dans le diagramme pseudo-binaire, et les teneurs réelles en AIN, désignées sous le terme de teneurs en AIN libre.

On connaît trois composés définis de type oxynitrure d'aluminium, qu'on peut décrire dans le diagramme pseudo-binaire AIN - Al₂O₃ :
- le composé 2 Al₂O₃, AIN qui constitue une phase solide dénommée « phase γ », dont la teneur équivalente en AlN est de 16,7%, mais dont le domaine d'existence, qui dépend de la température, s'étend de 6,6% à 18,6% d'AlN. Cette phase qui n'est stable qu'entre 1640°C et 2085°C, se décompose lentement dans l'état solide en dessous de 1640°C . Cette matière est souvent dénommée AlON γ.
- le composé 4 Al₂O₃, AIN qui constitue une phase solide dénommée « phase φ' » dont la teneur équivalente en AIN est de 9,1% mais dont le domaine d'existence, qui dépend de la température, s'étend de 4,7% à 9,3% d'AlN. Cette phase qui n'est stable qu'entre 1925°C et 2064°C, se décompose lentement dans l'état solide en dessous de 1925°C. Cette matière est souvent dénommée AlON φ'.
- le composé 8 Al₂O₃, AlN qui constitue une phase solide dénommée « phase δ » dont la teneur équivalente en AIN est de 4,8%. Cette phase n'est stable qu'entre 1985°C et 2041°C. En dessous de 1985°C, cette phase se décompose en phase φ' et alumine α.

Le diagramme de phases Al₂O₃ - AIN a fait l'objet de plusieurs études, dont une thèse de Patrick Tabary à l'Université de Paris-Sud en 1997.

On y apprend que les trois phases décrites ci-dessus présentent une dureté Vickers de 18,4 GPa contre 20 GPa pour le corindon et 22 GPa pour les alumines obtenues par voie sol-gel.

Ces trois phases présentent une remarquable inertie chimique et sont inattaquables à l'eau dans large domaine de pH. Par contre le nitrure AIN se décompose rapidement au contact de l'eau en donnant du gaz ammoniac.

La demanderesse a tenté de développer des grains abrasifs à base d'oxynitrure d'aluminium de type AlON y, avec une teneur équivalente en AIN comprise entre 11 et 12,5%, préparés par nitruration directe et fusion selon les brevets EP 0 494 129 et EP 0 509 940, et obtenus par refroidissement rapide à partir du matériau fondu. L'expérience a montré que, malgré une trempe énergique, on ne pouvait éviter une certaine décomposition de l'AlON γ en nitrure d'aluminium et alumine, ce qui a pour conséquence de laisser un produit qui, au contact de l'humidité, dégage de l'ammoniac.

Par ailleurs malgré une dureté sensiblement inférieure à celle de l'alumine α, les propriétés abrasives de ce matériau se sont avérées certes supérieures à celles de l'alumine α, mais inférieures à celles de grains abrasifs préparés par la voie sol-gel. Lors d'une fabrication de matériau électro-fondu de type AlON γ destiné à être coulé et trempé, un incident sur le four a conduit à un arrêt prolongé ; la charge s'est finalement solidifiée dans le four sans pouvoir être coulée et l'absence de liquide a empêché le redémarrage en fusion. Le four a finalement été démonté et sa démolition s'est avérée particulièrement difficile. Les zones les plus dures à démolir ont fait l'objet d'analyses qui ont permis d'identifier des matériaux qui, en dépit de faibles teneurs équivalentes en AIN et d'une vitesse de refroidissement particulièrement lente, ont révélé des propriétés intéressantes.

La demanderesse a ainsi isolé des matériaux qui, au terme d'un refroidissement très lent, se sont avérés constitués d'un mélange d'AlON φ' et d'AlON y, et qui présentaient une dureté inhabituelle et inattendue.

Ce type de matériau préparé en grains a montré des qualités abrasives exceptionnelles, très supérieures à celles du produit de l'art antérieur, positionné entre les teneurs équivalentes en AIN de 11 et 12,5%.

Ce matériau a ensuite été fabriqué en remplaçant le four de fusion avec coulée par un four de type Higgins ; dans cette technique, le four, qui n'est pas coulé, se remplit progressivement ; le four plein est arrêté et abandonné en refroidissement naturel. Il est à noter que la vitesse de refroidissement du matériau ainsi élaboré dépend directement de la taille du four.

Après plusieurs essais destinés à optimiser la composition du matériau, on a finalement identifié un domaine de composition optimal situé entre les teneurs équivalentes en AIN de 2,5% et 7,5%, et préférentiellement entre 3 et 6%.

Malgré les vitesses de refroidissement constatées avec un four capable de préparer des masses de 16 tonnes, vitesses qui sont très inférieures à 1°C par minute, on a noté des teneurs réelles en AIN très basses, inférieures à 0,3%, voire inférieures à 0,1%. Par ailleurs le produit obtenu est mécaniquement stable au contact de l'eau. Ainsi, un lavage à l'eau du produit en grains permet d'éliminer les traces d'AIN résiduel sans altérer la qualité mécanique des grains ; on peut ainsi descendre la teneur réelle en AIN des grains à moins de 0,01%. L'intérêt d'un tel lavage à l'eau est essentiellement de fournir des grains qui ultérieurement ne dégageront aucune odeur au contact de l'humidité.

On a également constaté que les procédés décrits dans EP 0494129 et EP 0509940 permettent d'obtenir des matériaux à faibles teneurs en aluminium métal.

Ainsi les matériaux selon l'invention peuvent au moyen de ces procédés être préparés avec des teneurs en Al inférieures à 0,3%, voire 0,1%. Si par ailleurs on prend le soin d'effectuer le lavage à l'eau destiné à détruire les traces d'AIN avec une eau acidifiée de pH compris entre 5 et 7, par exemple avec de l'acide sulfurique, on peut simultanément descendre la teneur en aluminium résiduaire à moins de 0,01%.

Dans le procédé décrit aux brevets EP 0494129 et EP 0509940, la fabrication des oxynitrures fondus et coulés nécessite de préparer un volume de bain liquide important et suffisamment surchauffé pour permettre la coulée. Cette étape semblait incontournable pour obtenir un produit stabilisé par trempe. Or, il est apparu de façon inattendue qu'avec des vitesses de refroidissement extrêmement lentes, très inférieures à 1°C par minute, comme celles que l'on obtient avec un four Higgins de taille industrielle de plusieurs tonnes, on pouvait obtenir des produits qui, d'une part ne contiennent que très peu de nitrure d'aluminium libre, et d'autre part conservent une structure constituée majoritairement d'AlON φ' et d'AlON γ. Ces produits présentent des propriétés abrasives remarquables, notamment une dureté égale ou supérieure à 16 GPa, et une ténacité égale ou supérieure à 1,5 MPa√m.

La demanderesse a également constaté qu'on pouvait obtenir un matériau plus tenace en ajoutant à la charge de l'oxyde te titane et/ou de l'oxyde de chrome à une teneur globale comprise entre 0,2 et 3,5%, et de préférence entre 2,5 et 3,5% en poids de la charge.

Ainsi, on peut, par exemple, remplacer tout ou partie de l'alumine de la charge du four Higgins par du corindon brun contenant de l'oxyde de titane. Avec une charge constituée de corindon brun à 3% de TiO₂ et d'oxynitrure d'aluminium préparé par le procédé du brevet EP 0494129, on obtient des matériaux d'une ténacité supérieure à 2 MPa√m.

Or l'avantage d'une fusion en four industriel de type Higgins est de permettre de travailler avec un procédé beaucoup plus simple que celui décrit dans les brevets EP0494129 et EP 0509940.

On peut également fabriquer les produits selon l'invention par frittage sous atmosphère inerte, azote ou argon, à partir des matériaux de base à des températures comprises entre 1950°C et 2000°C. Les propriétés abrasives des grains abrasifs ainsi obtenus se sont avérés voisines de celles du produit obtenu en passant par la phase liquide, sous réserve de ramener ce matériau à la température ambiante à des vitesses de refroidissement comparables.

### Exemples

### Méthodes d'analyses et de contrôle

La teneur en AIN équivalent a été mesurée sur échantillons de 5 mg pesés à 0,1 mg près, par combustion dans un analyseur de gaz LECO TC 436, et analyse par conductivité thermique pour l'azote, et par spectrométrie d'absorption infrarouge pour l'oxygène.

Sur chaque échantillon, le résultat indiqué est la moyenne de cinq mesures.

La mesure de la teneur en AIN libre a été faite par attaque acide en milieu sulfurique et dosages des ions NH₄⁺ obtenus.

### Exemple 1

On a mélangé 2500 kg d'alumine Bayer en poudre inférieure à 100 µm, avec 1000 kg d'aluminium en poudre de granulométrie inférieure à 1,2 mm. Ce mélange a été placé dans un four étanche, dégazé sous vide, puis chauffé sous une pression d'azote de 1 at.

La nitruration a démarré vers 700°C, et l'on a maintenu la pression d'azote pour favoriser la montée en température de la charge. La réaction exothermique a permis d'atteindre environ 1750°C en fin d'opération.

Après refroidissement, on a récupéré au terme de l'opération une masse de 4010 kg, poreuse, homogène, mécaniquement peu solide.

L'opération a été refaite trois fois pour finalement disposer d'un lot de 16100 kg qui a été broyé à une granulométrie inférieure à 10 mm, puis échantillonné et analysé. L'analyse a donné :
Teneur en AIN équivalent : 35,6%
Teneur réelle en AIN présent sous la forme AIN: 5,3%.
Teneur en Al métal : 0,05%

### Exemple 2

On a préparé 16000 kg d'un mélange constitué de 3200 kg du produit obtenu à l'exemple N°1 et 12800 kg d'alumine Bayer.

Ce mélange a été fondu dans un four Higgins de 1,8 MW.

En fin d'opération le four a été arrêté et laissé en refroidissement naturel. Au terme de cinq jours, la masse obtenue était suffisamment refroidie pour pouvoir être cassée.

Le produit obtenu a fait l'objet d'un examen de structure, et on a observé deux phases principales : Alon φ' et Alon y, et une phase minoritaire : l'alumine α. Le produit obtenu a été broyé et conditionné en grains.

L'analyse de ce produit a donné :
Teneur en AIN équivalent : 5,9%
Teneur réelle en AIN présent sous la forme AIN: 0,05%.
Teneur en Al métal : 0,02%

Le produit a été broyé, lavé à l'eau, séché, puis conditionné et classé en différents calibres dont des grains F30 et des grains F80 selon la norme FEPA.

Ces grains ont été testés en atmosphère humide : aucun dégagement de gaz ammoniac n'a été décelé.

Les propriétés mécaniques des grains F30 obtenus dans l'opération ont été mesurées par indentation avec une force de 2 N appliquée pendant 10 secondes et comparées aux résultats donnés par d'autres produits.

Les résultats sont rassemblés dans le tableau 1 :

**Tableau 1**

| | Dureté Knoop | Dureté Vickers | Ténacité |
|---|---|---|---|
| Produit de l'exemple 2 | 18,1 GPa | 17,7 GPa | 1,65 MPa.m^{1/2} |
| Corindon blanc | 20,3 GPa | 20 GPa | 2,0 MPa.m^{1/2} |
| Oxynitrure d'Al de l'art antérieur | 18,0 GPa | 17,3 GPa | 1,6 MPa.m^{1/2} |
| Abrasif de type sol-gel | 21,5 GPa | 21,2 GPa | 3,7 MPa.m^{1/2} |

Deux lots de grains abrasifs F80 ont été préparés pour des essais comparatifs de meules à liant vitrifié :
- un lot de grains d'alumine sol - gel tels que ceux habituellement mis en oeuvre dans cette application,
- un lot de grains abrasifs issus de l'exemple précédent.

Six lots de meules ont été fabriqués en utilisant chaque fois, un mélange de 70% de grains F80 de corindon blanc électro-fondu et 30% de grains à tester.

Les dimensions de ces meules étaient les suivantes :
Diamètre extérieur : 160 mm ; diamètre intérieur: 20 mm ; épaisseur: 20 mm.

Trois lots de meules ont été fabriqués avec ces échantillons avec des taux de liants correspondant aux grades I, K, et M.

Des tests de meulage ont été effectués avec ces six lots de meules sur des barreaux d'acier 100C6, section 12x12 mm, avec une pression de 2 bars et une vitesse tangentielle en périphérie de meule de 50 m/s . La durée de chaque essai était de 6 minutes, soit 3 opérations de 2 minutes, avec arrêt de 3 minutes entre 2 opérations successives.

Les résultats obtenus ont été exprimés à travers les trois paramètres habituels : enlèvement de matière, ratio G (enlèvement de matière / usure de meule) et puissance absorbée, et rassemblés dans le tableau 2 :

**Tableau 2**

| | Alumine sol-gel | | | Produit de l'exemple N°2 | | |
|---|---|---|---|---|---|---|
| | Grade I | Grade K | Grade M | Grade I | Grade K | Grade M |
| Enlèvement de matière (g/mn) | 15,6 | 8,9 | 5,3 | 19,0 | 15,0 | 13,0 |
| Ratio G | 50,6 | 38,3 | 27,7 | 48,7 | 42,8 | 43,3 |
| Puissance absorbé (W) | 955 | 1068 | 1113 | 912 | 1350 | 1560 |
| Energie /Enlèvement de matière (kWh/kg) | 1,02 | 2,0 | 3,5 | 0,8 | 1,5 | 2,0 |

On constate donc, par rapport au meilleur produit de l'art antérieur, un enlèvement de matière plus rapide, un meilleur ratio G, et une consommation d'énergie moindre qui se traduit par un moindre échauffement de la pièce usinée.

Le même test de meulage a été effectué avec trois lots de meules de grade M fabriquées dans les mêmes conditions que les précédentes avec, soit le lot de grains préparés dans cet exemple, soit un lot de grains de type oxynitrure d'Al de l'art antérieur, soit un lot de grains d'alumine sol - gel tels que ceux habituellement mis en oeuvre dans cette application.

Ce test a été complété par un essai de meule préparée avec des grains F80 de corindon blanc exclusivement.

Les résultats obtenus ont été exprimés à travers les trois paramètres habituels : enlèvement de matière, ratio G (enlèvement de matière / usure de meule) et puissance absorbée, et rassemblés dans le tableau 3 :

**Tableau 3**

| | Enlèvement de matière (g) | Ratio G | Puissance absorbée (W) | Energie/Enlève ment de matière (kWh/kg) |
|---|---|---|---|---|
| Produit de l'exemple 2 | 13,0 | 43,3 | 1560 | 2,0 |
| Oxynitrure d'Al de l'art antérieur | 5,4 | 20,6 | 1231 | 3,8 |
| Abrasif de type sol-gel | 5,3 | 27,7 | 1113 | 3,5 |
| Corindon blanc | 4,9 | 15,0 | 1558 | 5,3 |

### Exemple 3

On a préparé un mélange constitué de 20% du produit obtenu à l'exemple N°1 et de 80% d'alumine Bayer. Ce mélange a été broyé à une granulométrie inférieure à 2 µm. Une pâte a été préparée par malaxage avec ajout de 1% de carboxyméthylcellulose, puis pressée à 500 bars et extrudée en bâtonnets cylindriques de diamètre 1 mm.

Ce matériau cru a été traité à 1950°C, puis refroidi jusqu'à l'ambiante à une vitesse de 1°C par minute.

Ce matériau a ensuite été broyé, lavé, séché, puis classé ; les grains F30 et F80 ont servi aux opérations suivantes :
- sur les grains F30, on a mesuré les caractéristiques mécaniques du matériau.
- les grains F80 ont été utilisés pour fabriquer un lot de meules en Grade M dans des identiques à celles de l'exemple 2 ; ces meules ont été testées dans les mêmes conditions qu'à l'exemple précédent.

Les résultats de ces essais sont indiqués au tableau 4 :

**Tableau 4**

| | Dureté Knoop | Dureté Vickers | Ténacité |
|---|---|---|---|
| Produit de l'exemple 3 | 17,9 GPa | 17,5 GPa | 1,6 MPa√m |
| Abrasif de type sol-gel | 21,5 GPa | 21,2 GPa_ | 3,7 MPa√m |

| | Enlèvement de matière (g) | Ratio G | Puissance absorbée (W) | Energie / Enlèvement de matière (kWh/kg) |
|---|---|---|---|---|
| Produit de l'exemple 3 | 7,9 | 43 | 1232 | 2,6 |
| Abrasif de type sol-gel | 5,3 | 27,7 | 1113 | 3,5 |

### Exemple 4

On a refait l'exemple N°2 en remplaçant dans la charge du four Higgins, l'alumine Bayer par du corindon brun dont la teneur en TiO₂ était de 3,6 %.

L'analyse du produit a donné :
Teneur en AIN équivalent : 6,0%
Teneur réelle en AIN présent sous la forme AIN: 0,05%.
Teneur en Al métal : 0,02%
Teneur en titane « exprimé en TiO₂ » : 2,8%

L'expression : « exprimé en TiO₂ » signifie dans le jargon du chimiste de l'art, que la teneur déterminée en titane élémentaire a été multipliée par 80/48 en faisant l'hypothèse gratuite et partiellement fausse que tout le titane est présent sous la forme d'oxyde.

Le produit obtenu a ensuite été broyé, lavé à l'eau, séché, puis conditionné et classé en différents calibres dont des grains F30 et des grains F80 selon la norme FEPA. Ces grains ont été testés en atmosphère humide : aucun dégagement de gaz ammoniac n'a été décelé.

Les propriétés mécaniques des grains F30 obtenus dans l'opération ont été mesurées par indentation avec une force de 2 N appliquée pendant 10 secondes et comparées aux résultats donnés par d'autres produits.

Les résultats sont rassemblés dans le tableau ci-dessous:

**Tableau 5**

| | Dureté Knoop | Dureté Vickers | Ténacité |
|---|---|---|---|
| Produit de l'exemple 2 | 18,1 GPa | 17,7 GPa | 1,65 MPa.m^{1/2} |
| Corindon blanc | 20,3 GPa | 20 GPa | 2,0 MPa.m^{1/2} |
| Oxynitrure d'Al de l'art antérieur | 18,0 GPa | 17,3 GPa | 1,6 MPa.m^{1/2} |
| Abrasif de type sol-gel | 21,5 GPa | 21,2 GPa | 3,7 MPa.m^{1/2} |
| Produit de l'exemple 4 | 18,9 GPa | 18,0 GPa | 2,4 MPa.m^{1/2} |

Les résultats obtenus au test de meulage sont indiqués au tableau 6 :

**Tableau 6**

| | Grade I | Grade K | Grade M |
|---|---|---|---|
| Enlèvement matière (g/mn) | 16,6 | 12,0 | 8,0 |
| Ratio G | 47,4 | 41,4 | 32,0 |
| Puissance absorbée (W) | 896 | 1224 | 1200 |
| Energie/enlèvement (kWh/kg) | 0,9 | 1,7 | 2;5 |

### Exemple 5

On a préparé un mélange constitué de 20% du produit obtenu à l'exemple N°1 et de 80% de corindon brun semi-friable dont la teneur en TiO₂ était de 1,4 %.

Ce mélange a été broyé à une granulométrie inférieure à 2 µm.

Une pâte a été préparée par malaxage avec ajout de 1% de carboxyméthylcellulose, puis pressée à 500 bars et extrudée en bâtonnets cylindriques de diamètre 1 mm.

Ce matériau cru a été traité à 1980°C, puis refroidi jusqu'à l'ambiante à une vitesse de 1°C par minute.

Ce matériau a ensuite été broyé, lavé, séché, puis classé ; les caractéristiques mécaniques du matériau ont été mesurées sur les grains F30 ainsi obtenus.

Les résultats de ces essais sont indiqués au tableau 7 :

**Tableau 7**

| | Dureté Knoop | Dureté Vickers | Ténacité |
|---|---|---|---|
| Produit de l'exemple 5 | 19,0 GPa | 18,6 GPa | 2,2 MPa.m^{1/2} |
| Abrasif de type sol-gel | 21,5 GPa | 21,2 GPa_ | 3,7 MPa.m^{1/2} |

### Exemple 6

On a refait un essai de fusion en four Higgins avec comme charge :
1500 kg du produit obtenu à l'exemple N°1
1500 kg d'alumine Bayer
13000 kg de corindon brun à 3,6% de TiO₂.

Ce mélange a été fondu dans un four Higgins de 1,8 MW.

En fin d'opération, le four a été arrêté et laissé en refroidissement naturel. Au terme de cinq jours, la masse obtenue était suffisamment refroidie pour pouvoir être cassée. Le produit obtenu a fait l'objet d'un examen de structure, et on a observé deux phases majoritaires : l'Alon φ' et l'Alon γ ainsi qu'une phase très minoritaire d'alumine α. Le produit obtenu a été broyé et conditionné en grains

L'analyse de ce produit a donné :

| | |
|---|---|
| Teneur en AIN équivalent : | 3,0% |
| Teneur en titane exprimée en TiO₂ : | 2,9% |

Le produit a été broyé, lavé à l'eau, séché, puis conditionné et classé en différents calibres dont des grains F30 et des grains F80 selon la norme FEPA.

Ces grains ont été testés en atmosphère humide : aucun dégagement de gaz ammoniac n'a été décelé.

Les propriétés mécaniques des grains F30 obtenus dans l'opération ont été mesurées par indentation avec une force de 2 N appliquée pendant 10 secondes et comparées aux résultats donnés par d'autres produits.

Les résultats sont rassemblés dans le tableau 8:

**Tableau 8**

| | Dureté Knoop | Dureté Vickers | Ténacité |
|---|---|---|---|
| Produit de l'exemple 2 | 18,1 GPa | 17,7 GPa | 1,65 MPa.m^{1/2} |
| Corindon blanc | 20,3 GPa | 20 GPa | 2,0 MPa.m^{1/2} |
| Oxynitrure d'Al de l'art antérieur | 18,0 GPa | 17,3 GPa | 1,6 MPa.m^{1/2} |
| Produit de l'exemple 4 | 18,5 GPa | 18,0 GPa | 2,0 MPa.m^{1/2} |
| Produit de l'exemple 6 | 18,9 GPa | 18,4 GPa | 2,4 MPa.m^{1/2} |

## Revendications

1. Produit abrasif choisi parmi les meules abrasives, en particulier destinées à la rectification des métaux et alliages métalliques, les toiles abrasives, les papiers abrasifs et les pâtes de polissage, ledit produit abrasif comprenant des grains à base d'oxynitrure d'aluminium, **caractérisé en ce que** lesdits grains ont une teneur équivalente en AIN, mesurée sur un diagramme pseudo-binaire Al₂O₃-AlN, comprise entre 2,5% et 7,5% en poids, et une structure constituée majoritairement d'AlON φ' et d'AlON γ.

2. Produit abrasif selon la revendication 1, **caractérisé en ce que** lesdits grains ont une teneur équivalente en AIN comprise entre 3% et 6% en poids.

3. Produit abrasif selon l'une des revendications 1 ou 2, **caractérisé en ce que** lesdits grains ont une teneur en aluminium métal inférieure à 0,3% en poids, et une teneur en nitrure d'aluminium libre AIN inférieure à 0,3%.

4. Produit abrasif selon la revendication 3, **caractérisé en ce que** lesdits grains ont une teneur en aluminium métal inférieure à 0,1%, et une teneur en nitrure d'aluminium libre AIN inférieure à 0,1%.

5. Produit abrasif selon l'une des revendications 1 à 4, **caractérisé en ce que** lesdits grains contiennent également des oxydes de titane à une teneur totale comprise entre 0,2 et 3,5% en poids.

6. Produit abrasif selon la revendication 5, **caractérisé en ce que** lesdits grains contiennent des oxydes de titane à une teneur totale comprise entre 2,5% et 3,5 % en poids.

7. Produit abrasif selon l'une des revendications 1 à 6, **caractérisé en ce que** lesdits grains contiennent également des oxydes de chrome à une teneur totale comprise entre 0,2 et 3,5% en poids, de préférence entre 2,5 et 3,5% en poids.

8. Procédé de fabrication de produits abrasifs selon les revendications 1 à 7 **caractérisé en ce qu'**on utilise des grains à base d'oxynitrure d'aluminium, ayant une teneur équivalente en AIN, mesurée sur un diagramme pseudo-binaire Al₂O₃-AlN, comprise entre 2,5% et 7,5% en poids, et une structure constituée majoritairement d'AlON φ' et d'AlON γ

9. Procédé de préparation de grains tels que définis à l'une des revendications 1 à 7, comportant la préparation d'une charge d'alumine, de nitrure d'aluminium AIN et/ou d'oxynitrure AlₓO_{y}N_{z}, la fusion de cette charge et son refroidissement à moins de 1°C par minute.

10. Procédé selon la revendication 9, **caractérisée en ce que** la charge comprend également de l'oxyde de chrome et/ou de l'oxyde de titane.

11. Procédé selon la revendication 10, **caractérisé en ce que** l'oxyde de titane est ajouté à la charge sous forme de corindon brun contenant de 1 à 4% de TiO₂.

12. Procédé de préparation de grains tels que définis à l'une des revendications 1 à 7, comportant la préparation d'un mélange de poudres d'alumine, de nitrure d'aluminium AIN et/ou d'oxynitrure AlₓO_{y}N_{z}, le frittage réactif de ce mélange à une température comprise entre 1950 et 2000°C, et le refroidissement des grains frittés à moins de 1°C par minute.

13. Procédé selon la revendication 12, **caractérisé en ce que** le mélange contient également de l'oxyde de chrome et/ou de l'oxyde de titane.

14. Procédé selon la revendication 13, **caractérisé en ce que** l'oxyde de titane est apporté sous forme de corindon brun contenant de 1 à 4% de TiO₂.

15. Procédé selon l'une des revendications 8 à 14, **caractérisé en ce qu'**il comporte un lavage final des grains avec de l'eau acidifiée de pH compris entre 5 et 7.

16. Produit abrasif selon la revendication 1, **caractérisé en ce que** lesdits grains ont une teneur en aluminium métal inférieure à 0,01% et une teneur réelle en nitrure d'aluminium Al inférieure à 0,01%.

17. Grain abrasif à base d'oxynitrure d'aluminium, avec une teneur équivalente en AIN, mesurée sur un diagramme pseudo-binaire Al₂O₃-AlN, comprise entre 2,5% et 7,5% en poids, et une structure constituée majoritairement d'AlON φ' et d'AlON γ **caractérisé en ce qu'**il contient également des oxydes de titane à une teneur totale comprise entre 0,2 et 3,5% en poids.

18. Grain abrasif selon la revendication 17, **caractérisé en ce qu'**il contient des oxydes de titane à une teneur totale comprise entre 2,5 et 3,5% en poids.

19. Grain abrasif selon la revendication 17 ou 18 **caractérisé en ce qu'**il contient également des oxydes de chrome à une teneur totale comprise entre 0,2 et 3,5% en poids, de préférence entre 2,5 et 3,5% en poids.

## Patentansprüche

1. Schleifprodukt, ausgewählt aus Schleifscheiben, insbesondere für das Schleifen von Metallen und Metalllegierungen, Schleiftüchern, Schleifpapieren und Polierpasten, wobei das Schleifprodukt Körner auf der Basis von Aluminiumoxynitrid umfasst, **dadurch gekennzeichnet, dass** die Körner einen äquivalenten Gehalt an AlN, gemessen in einem pseudo-binären Diagramm von Al₂O₃-AlN, von 2,5 bis 7,5 Gew.-% und eine Struktur, die hauptsächlich aus AION φ' und AION γ besteht, aufweisen.

2. Schleifprodukt gemäß Anspruch 1, **dadurch gekennzeichnet, dass** die Körner einen äquivalenten Gehalt an AlN zwischen 3 und 6 Gew.-% aufweisen.

3. Schleifprodukt gemäß einem der Ansprüche 1 oder 2, **dadurch gekennzeichnet, dass** die Körner einen Aluminiummetallgehalt von weniger als 0,3 Gew.-% und einen Gehalt an freiem Aluminiumnitrid AlN von weniger als 0,3 Gew.-% aufweisen.

4. Schleifprodukt gemäß Anspruch 3, **dadurch gekennzeichnet, dass** die Körner einen Aluminiummetallgehalt von weniger als 0,1 % und einen Gehalt an freiem Aluminiumnitrid AlN von weniger als 0,1 % aufweisen.

5. Schleifprodukt gemäß einem der Ansprüche 1 bis 4, **dadurch gekennzeichnet, dass** die Körner ebenfalls Titanoxide mit einem Gesamtgehalt zwischen 0,2 und 3,5 Gew.-% enthalten.

6. Schleifprodukt gemäß Anspruch 5, **dadurch gekennzeichnet, dass** die Körner Titanoxide mit einem Gesamtgehalt zwischen 2,5 und 3,5 Gew.-% enthalten.

7. Schleifprodukt gemäß einem der Ansprüche 1 bis 6, **dadurch gekennzeichnet, dass** die Körner ebenfalls Chromoxide mit einem Gesamtgehalt zwischen 0,2 und 3,5 Gew.-%, vorzugsweise zwischen 2,5 und 3,5 Gew.-%, enthalten.

8. Verfahren zur Herstellung von Schleifprodukten gemäß den Ansprüchen 1 bis 7, **dadurch gekennzeichnet, dass** Körner auf der Basis von Aluminiumoxynitrid mit einem äquivalenten Gehalt an AIN, gemessen in einem pseudo-binären Diagramm von Al₂O₃-AlN, von 2,5 bis 7,5 Gew.-% und einer Struktur, die hauptsächlich aus AlON φ' und AlON γ besteht, verwendet werden.

9. Verfahren zur Herstellung von Körnern, wie sie in einem der Ansprüche 1 bis 7 definiert sind, umfassend das Herstellen einer Charge aus Aluminiumoxid, Aluminiumnitrid AlN und/oder Oxynitrid Al_{X}O_{Y}N_{Z} sowie das Schmelzen und Abkühlen der Charge mit weniger als 1 °C pro Minute.

10. Verfahren gemäß Anspruch 9, **dadurch gekennzeichnet, dass** die Charge ebenfalls Chromoxid und/oder Titanoxid enthält.

11. Verfahren gemäß Anspruch 10, **dadurch gekennzeichnet, dass** der Charge das Titanoxid in Form von 1 bis 4 % TiO₂ enthaltendem braunen Korund zugesetzt wird.

12. Verfahren zur Herstellung von Körnern, wie sie in einem der Ansprüche 1 bis 7 definiert sind, umfassend das Herstellen einer Pulvermischung aus Aluminiumoxid, Aluminiumnitrid AIN und/oder Oxynitrid Al_{X}O_{Y}N_{Z}, das reaktive Sintern dieser Mischung bei einer Temperatur zwischen 1950 und 2000 °C und das Abkühlen der gesinterten Körner mit weniger als 1 °C pro Minute.

13. Verfahren gemäß Anspruch 12, **dadurch gekennzeichnet, dass** die Mischung ebenfalls Chromoxid und/oder Titanoxid enthält.

14. Verfahren gemäß Anspruch 13, **dadurch gekennzeichnet, dass** das Titanoxid in Form von 1 bis 4 % TiO₂ enthaltendem braunen Korund zugegeben wird.

15. Verfahren gemäß einem der Ansprüche 8 bis 14, **dadurch gekennzeichnet, dass** es ein abschließendes Waschen der Körner mit angesäuertem Wasser mit einem pH-Wert zwischen 5 und 7 umfasst.

16. Schleifprodukt gemäß Anspruch 1, **dadurch gekennzeichnet, dass** die Körner einen Aluminiummetallgehalt von weniger als 0,01 % und einen tatsächlichen Gehalt an Aluminiumnitrid AlN von weniger als 0,01 % aufweisen.

17. Schleifkorn auf der Basis von Aluminiumoxynitrid mit einem äquivalenten Gehalt an AlN, gemessen in einem pseudo-binären Diagramm von Al₂O₃-AlN, von 2,5 bis 7,5 Gew.-% und einer Struktur, die hauptsächlich aus AlON φ' und AION γ besteht, **dadurch gekennzeichnet, dass** es ebenfalls Titanoxide mit einem Gesamtgehalt zwischen 0,2 und 3,5 Gew.-% enthält.

18. Schleifkorn gemäß Anspruch 17, **dadurch gekennzeichnet, dass** es Titanoxide mit einem Gesamtgehalt zwischen 2,5 und 3,5 Gew.-% enthält.

19. Schleifkorn gemäß Anspruch 17 oder 18, **dadurch gekennzeichnet, dass** es ebenfalls Chromoxide mit einem Gesamtgehalt zwischen 0,2 und 3,5 Gew.-%, vorzugsweise zwischen 2,5 und 3,5 Gew.-%, enthält.

## Claims

1. Abrasive product chosen among grinding wheels, in particular for grinding metals and metallic alloys, abrasive clothes, polishing papers and polishing pastes, said abrasive product comprising grains based on aluminium oxynitride, **characterised in that** the said grains have an equivalent content of AlN as measured on an Al₂O₃-AlN pseudo-binary diagram between 2.5% and 7.5% by weight, and a structure composed mainly of φ'-AlON and γ-AlON.

2. Abrasive product according to claim 1, **characterised in that** the said grains have an equivalent content of AlN between 3% and 6% by weight.

3. Abrasive product according to claim 1 or 2, **characterised in that** the said grains have a metal aluminium content of less than 0.3% by weight, and a free aluminium nitride content AlN of less than 0.3%.

4. Abrasive product according to claim 3, **characterised in that** the said grains have a metal aluminium content of less than 0.1% by weight, and a free aluminium nitride content AlN of less than 0.1%.

5. Abrasive product according to one of claims 1 to 4, **characterised in that** the said grains further comprise titanium oxides at a total content of between 0.2% and 3.5% by weight.

6. Abrasive product according to claim 5, **characterised in that** the said grains further comprise titanium oxides at a total content of between 2.5% and 3.5% by weight.

7. Abrasive product according to one of claims 1 to 6, **characterised in that** the said grains further comprise chromium oxides at a total content of between 0.2 and 3.5% by weight, preferably between 2.5 and 3.5% by weight.

8. Manufacturing process of abrasive products according to claims 1 to 7 **characterised in that** grains based on aluminium oxynitride are used, said grains having an equivalent content of AlN as measured on an Al₂O₃-AlN pseudo-binary diagram between 2.5% and 7.5% by weight, and a structure composed mainly of φ'-AlON and γ-AlON.

9. Process for preparation of abrasive products according to one of claims 1 to 7, including the preparation of a content of alumina, aluminium nitride AlN and/or oxynitride Al_{X}O_{Y}N_{Z}, this content being melted and cooled at less than 1°C per minute.

10. Process according to claim 9, **characterised in that** the content also includes titanium and/or chromium oxide.

11. Process according to claim 10, **characterised in that** the titanium oxide is added to the content in the form of brown corundum containing from 1% to 4% TiO₂.

12. Process for preparation of abrasive grains according to one of claims 1 to 7, including the preparation of a mix of alumina, aluminium nitride AlN and/or oxynitride Al_{X}O_{Y}N_{Z}, reactive sintering of this mix at a temperature of between 1950 and 2000°C, and cooling of the sintered grains at less than 1°C per minute.

13. Process according to claim 12, **characterised in that** the mix also contains chromium oxide and/or titanium oxide.

14. Process according to claim 13, **characterised in that** the titanium oxide is added in the form of brown corundum containing from 1% to 4% of TiO₂.

15. Process according to one of claims 8 to 14, **characterised in that** it includes a final washing of the grains with acid water with a pH of between 5 and 7.

16. Abrasive product prepared according to claim 1, **characterised in that** said grains have an aluminium metal content less than 0.01% and a real content of aluminium nitride Al less than 0.01%.

17. Abrasive grain based an aluminium oxynitrure, with an equivalent content of AlN as measured on an Al₂O₃-AlN pseudo-binary diagram between 2.5% and 7.5% by weight, and a structure composed mainly of φ'-AlON and γ-AlON, **characterised in that** it further comprises titanium oxides at a total content of between 0.2% and 3.5% by weight.

18. Abrasive grain according to claim 17, **characterised in that** it comprises titanium oxides at a total content of between 2.5% and 3.5% by weight.

19. Abrasive grain according to claim 17 or 18, **characterised in that** it further comprises chromium oxides at a total content of between 0.2 and 3.5%by weight, preferably between 2.5 and 3.5% by weight.
